# EUROPEAN PATENT SPECIFICATION

(11) **EP 3 521 659 B1**
(45) Date of publication and mention of the grant of the patent: **11.11.2020**
(21) Application number: 17855689.0
(22) Date of filing: 11.09.2017
(51) Int. Cl.: F16H 9/18, F16H 55/56, F16H 61/662

(54) **DRIVEN PULLEY DEVICE FOR V-BELT TYPE AUTOMATIC TRANSMISSION**
ANGETRIEBENE RIEMENSCHEIBENVORRICHTUNG FÜR AUTOMATIKGETRIEBE VOM KEILRIEMENTYP
DISPOSITIF DE POULIE RÉCEPTRICE POUR TRANSMISSION AUTOMATIQUE DE TYPE À COURROIE TRAPÉZOÏDALE

(30) Priority: 27.09.2016 JP 2016188644
(43) Date of publication of application: 07.08.2019
(73) Proprietor: Honda Motor Co., Ltd., Tokyo 107-8556 (JP)
(72) Inventor: HAYASHI, Tensei, Wako-shi Saitama 351-0193 (JP)
(74) Representative: Kiwit, Benedikt
(86) International application number: PCT/JP2017/032681
(87) International publication number: WO 2018/061732

(56) References cited:
- EP-A1- 1 413 802
- WO-A1-2014/115384
- JP-A- 2002 250 417
- JP-A- 2007 278 449
- JP-A- 2007 278 449
- JP-A- 2009 168 080

## Description

### TECHNICAL FIELD

The present invention relates to a V-belt type automatic transmission.

### BACKGROUND ART

Patent Document 1 discloses a V-belt type automatic transmission. When relative rotation occurs between a fixed pulley half and a movable pulley half in response to the driving force of a V belt upon speed change, a torque cam mechanism produces an axial driving force of the movable pulley half from the relative rotation. In particular, since a cam hole is defined as a polygonal line shape, the axial driving force can be enhanced in a high speed travel region, and a smooth transition from the high speed travel region to a low speed travel region can be realized. Patent Document 2 shows a driven pulley device according to the preamble of claim 1.

### RELATED ART DOCUMENTS

### PATENT DOCUMENTS

Patent Document 1: Japanese Patent Application Laid-open No. 5-60192
Patent Document 2: WO 2014/115384 A1.

### SUMMARY OF THE INVENTION

### PROBLEMS TO BE SOLVED BY THE INVENTION

A reduction in the weight of the V-belt type automatic transmission has been sought. When reducing the weight, an aluminum material has been proposed as a material for a movable pulley half. However, when a cam hole is defined in an aluminum movable pulley half, since a columnar cam pin is in contact with a side wall of the cam hole via one generatrix, the contact pressure is high, the aluminum material is easily worn, and it is anticipated that the precision of the cam hole will not be able to be sufficiently maintained.

An objective of the present invention is to provide a driven pulley device for a V-belt type automatic transmission that can greatly contribute to a reduction in the wear of a cam hole for guiding a cam pin in a torque cam mechanism.

### MEANS FOR SOLVING THE PROBLEMS

According to a first embodiment of the present invention, there is provided a driven pulley device for a V-belt type automatic transmission, comprising the features of claim 1.

According to a second embodiment of the present invention, in addition to the first embodiment, the directions of movement of the cam pin restricted by the cam holes have different angles.

According to a third embodiment of the present invention, in addition to the first or second embodiment, with regard to a shape of the cam hole, a portion where a state in which movement of the cam pin is not restricted changes to a state in which movement of the cam pin is restricted has a convexly curved face part that has a convexly curved face shape.

According to a fifth embodiment of the present invention, in addition to the third embodiment, an end part of the flat face of the cam pin has an end part curved face part having a curved face shape, and the end part curved face part and the convexly curved face part abut against each other.

According to a seventh embodiment of the present invention, in addition to any one of the previous embodiments, the outer tube is formed from a material that is lighter than the cam pin.

According to a eighth embodiment of the present invention, in addition to any one of the previous embodiments, the outer tube and the movable pulley half are formed as a unit.

### EFFECTS OF THE INVENTION

In accordance with the first embodiment, due to the cam pin having a flat face, the contact pressure with the cam hole can be reduced. As a result, the durability improves, the cam pin side can be made of iron, and the cam hole side can be made of aluminum.

In accordance with the first embodiment, since there are two or more types of cam holes for restricting the direction of movement of the cam pin, it is possible to change the direction of movement of the cam pin.

In accordance with the second embodiment, due to the angles being different, the magnitude of the axial component of force can be changed.

In accordance with the third embodiment, due to the convexly curved face shape being present, the change to a state in which it is restricted by the cam hole can be carried out smoothly.

In accordance with the fifth embodiment, due to the end part curved face part being present, the change to a state in which it is restricted by the cam hole can be carried out smoothly.

In accordance with the seventh embodiment, the weight can be reduced.

In accordance with the eighth embodiment, a part where the pulley half and the tube are joined becomes unnecessary, thus enabling high strength to be achieved. Furthermore, a joining step becomes unnecessary, thereby enabling the production cost to be lowered.

### BRIEF DESCRIPTION OF DRAWINGS

[FIG. 1] FIG. 1 is a side view schematically showing a scooter type two-wheeled motor vehicle related to one embodiment of a saddle-ridden vehicle, (first embodiment)
[FIG. 2] FIG. 2 is a horizontal sectional view along line 2-2 in FIG. 1. (first embodiment)
[FIG. 3] FIG. 3 is an enlarged sectional view in which part of FIG. 2 is enlarged. (first embodiment)
[FIG. 4] FIG. 4 is a developed view showing a cam profile of a first cam hole and a second cam hole. (first embodiment)

### MODES FOR CARRYING OUT THE INVENTION

One embodiment of the present invention is explained below by reference to the attached drawings. In the explanation below, the front-and-rear, up-and-down, and left-and-right are directions when viewed by an occupant riding a two-wheeled motor vehicle.

### FIRST EMBODIMENT

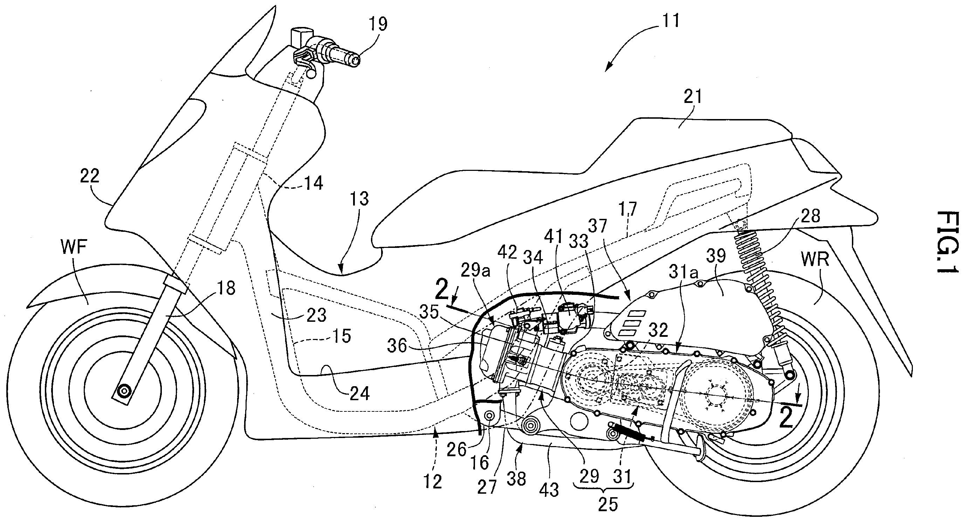

FIG. 1 schematically shows a scooter type two-wheeled motor vehicle related to one embodiment of a saddle-ridden vehicle. The two-wheeled motor vehicle 11 includes a body frame 12 and a body cover 13. The body frame 12 includes a head pipe 14 at the front end, a main frame 15 joined to the head pipe 14 via its front end, a cross pipe 16 joined to a rear part of the main frame 15 and extending in the vehicle width direction, and a pair of left and right rear frames 17 having front end parts connected to opposite end parts of the cross pipe 16 and extending in the vehicle fore-and-aft direction. A front fork 18 supporting a front wheel WF so that it can rotate around a horizontal axis and rod-shaped handlebars 19 are steerably supported on the head pipe 14.

The body cover 13 is fitted onto the body frame 12. An occupant seat 21 is mounted on the body cover 13 above the rear frame 17. The body cover 13 includes a front cover 22 that covers the head pipe 14 from the front, a leg shield 23 that is continuous from the front cover 22, and a step floor 24 that is continuous from the lower end of the leg shield 23 and is disposed above the main frame 15 between the occupant seat 21 and the front wheel WF.

A unit-swing type drive unit 25 is disposed in a space beneath the rear frame 17. The drive unit 25 is swingably linked in an up-and-down direction, via a link 27, to a bracket 26 joined to the front end of the rear frame 17. A rear wheel WR is supported by the rear end of the drive unit 25 so that it can rotate around a horizontal axis. A rear cushion unit 28 is disposed between the rear frame 17 and the drive unit 25 at a position spaced from the link 27 and the bracket 26. The drive unit 25 includes an air-cooled single-cylinder engine 29, and a transmission device 31 that is connected to the engine 29 and the rear wheel WR and transmits output from the engine 29 to the rear wheel WR. A transmission case 31a of the transmission device 31 is joined to an engine main body 29a of the engine 29.

The engine main body 29a of the engine 29 includes a crankcase 33 that supports a crankshaft 32 so that it can rotate around a rotational axis, a cylinder block 34 that is joined to the crankcase 33, a cylinder head 35 that is joined to the cylinder block 34, and a head cover 36 that is joined to the cylinder head 35. An intake device 37 and an exhaust device 38 are connected to the cylinder head 35. The intake device 37 includes an air cleaner 39 that is supported on the transmission case 31a and a throttle body 41 that is disposed between the air cleaner 39 and the cylinder head 35. A fuel injection valve 42 is mounted on an upper side wall of the cylinder head 35. The exhaust device 38 includes an exhaust pipe 43 that extends rearward from a lower side wall of the cylinder head 35 while passing beneath the engine main body 29a, and an exhaust muffler (not illustrated) that is connected to the downstream end of the exhaust pipe 43 and is linked to the crankcase 33.

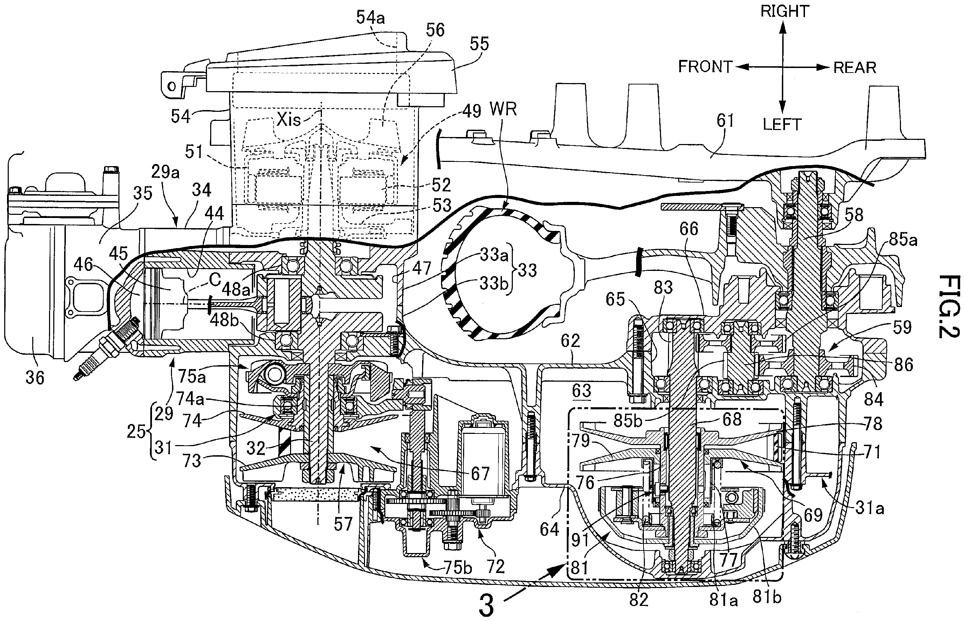

As shown in FIG. 2, a cylinder bore 44 is defined in the cylinder block 34. A piston 45 is slidably fitted into the cylinder bore 44 along a cylinder axis C. The cylinder axis C is inclined slightly upward to the front. The crankshaft 32 is linked to the piston 45. A rotational axis Xis of the crankshaft 32 is oriented in the vehicle width direction.

A combustion chamber 46 is defined in the cylinder head 35. The combustion chamber 46 is continuous from the cylinder bore 44. The piston 45 faces the cylinder head 35 and forms the combustion chamber 46 between itself and the cylinder head 35. An air-fuel mixture is introduced into the combustion chamber 46 via the intake device 37. Exhaust gas within the combustion chamber 46 is discharged via the exhaust device 38.

The crankcase 33 is divided into a first case half 33a and a second case half 33b. The first case half 33a and the second case half 33b define in cooperation a crank chamber 47. A crank of the crankshaft 32 is housed in the crank chamber 47. The first case half 33a has a bearing 48a that rotatably supports the crankshaft 32 whereas the second case half 33b has a bearing 48b that rotatably supports the crankshaft 32.

A generator 49 is joined to the crankcase 33. The generator 49 includes a tubular rotor 51 that is fixed to the crankshaft 32 extending through the first case half 33a of the crankcase 33 and protruding out of the first case half 33a, and a stator 52 that is surrounded by the rotor 51 and is disposed around the crankshaft 32. The stator 52 is fixed to a support plate 53 fastened to the first case half 33a. The generator 49 generates current in response to relative rotation of the rotor 51 and the stator 52.

A tubular generator cover 54 surrounding the generator 49 is joined to the first case half 33a. An air inlet 54a is defined at an open end of the generator cover 54. A radiator 55 is disposed in the air inlet 54a. A cooling fan 56 is joined to an outer face of the rotor 51. The cooling fan 56 rotates in response to the rotation of the crankshaft 32, and cooling air flows toward the radiator 55.

The transmission device 31 is housed within the transmission case 31a and includes an electronically controlled V-belt continuously variable transmission (hereinafter called a 'transmission') 57 that steplessly changes the speed of rotational power transmitted from the crankshaft 32, and a reduction gear mechanism 59 that is housed within the transmission case 31a and reduces the speed of rotational power of the transmission 57 and transmits it to an axle 58 of the rear wheel WR. The rear wheel WR is disposed between the transmission case 31a and a support arm 61. The support arm 61 is continuous from the crankcase 33 and extends to the rear of the vehicle. The exhaust muffler described above is mounted on the support arm 61. The axle 58 of the rear wheel WR is doubly supported by the transmission case 31a and the support arm 61 so that it can rotate around its axis.

The transmission case 31a includes a case main body 62 that is continuous from the second case half 33b of the crankcase 33, a case cover 64 that is fastened to the case main body 62 and defines a transmission chamber 63 between itself and the case main body 62, and a gear cover 66 that is fastened to the case main body 62 and defines a gear chamber 65 between itself and the case main body 62. The transmission 57 is housed in the transmission chamber 63. The reduction gear mechanism 59 is housed in the gear chamber 65. The case main body 62 and the case cover 64 in cooperation form a transmission case.

The transmission 57 includes a drive pulley device 67 that is disposed within the transmission chamber 63 and is mounted on the crankshaft 32 as a drive shaft, and a driven pulley device 69 that is disposed within the transmission chamber 63 and is mounted on a driven shaft 68 protruding from the transmission chamber 63 into the gear chamber 65. In the drive pulley device 67, a V-belt 71 is wound around between a fixed sheave (fixed pulley half) 73 that is fixed to the crankshaft 32 and a movable sheave 74 that is supported on the crankshaft 32 so that it can move in the axial direction of the crankshaft 32 while facing the fixed sheave 73. Similarly, in the driven pulley device 69 the V belt 71 is wound around a fixed sheave (fixed pulley half) 78 that is coaxially fitted around the driven shaft 68 and a movable sheave (movable pulley half) 79 that is coaxially fitted around the driven shaft 68 while facing the fixed sheave 78. Due to operation of an actuator unit 72 the belt winding diameter of the drive pulley device 67 is electronically controlled so as to be variable. The belt winding diameter of the driven pulley device 69 changes in response to a change in the belt winding diameter of the drive pulley device 67.

In the drive pulley device 67, the movable sheave 74 is disposed between the fixed sheave 74 and the second case half 33b of the crankcase 33. The movable sheave 74 has a movable sheave boss 74a that receives the crankshaft 32. The movable sheave boss 74a extends from a sheave body that receives the V-belt 71 toward the second case half 33b of the crankcase 24. The transmission 57 includes a first shift mechanism 75a and a second shift mechanism 75b that includes the actuator unit 72. Axial movement of the movable sheave 74 is realized in response to operation of the first shift mechanism 75a and the second shift mechanism 75b, and the winding radius of the V-belt 71 is changed.

The driven pulley device 69 includes an inner tube 76 that has a cylindrical shape coaxial with the driven shaft 68 and is coaxially fitted around the driven shaft 68, and an outer tube 77 that has a cylindrical shape coaxial with the driven shaft 68 and is coaxially fitted around the inner tube 76. The inner tube 76 is relatively rotatably supported on the driven shaft 68. The outer tube 77 is relatively rotatably and axially relatively displaceably supported on the inner tube 76. The fixed sheave 78 is coaxially fixed to the inner tube 76. The inner tube 76 and the fixed sheave 78 are formed as a unit from a material that is lighter than steel, such as for example aluminum. The movable sheave 79 is coaxially fixed to the outer tube 77. The outer tube 77 and the movable sheave 79 are formed as a unit from a material that is lighter than steel, such as for example aluminum. The movable sheave 79 moves closer to the fixed sheave 78 or moves away from the fixed sheave 78 according to relative displacement in the axial direction between the outer tube 77 and the inner tube 76.

A centrifugal clutch 81 is fitted around the driven shaft 68. The centrifugal clutch 81 includes a clutch plate 81a that is fixed to the inner tube 76. A coil spring 82 is disposed between the clutch plate 81a and the movable sheave 79. The coil spring 82 exhibits a resilient force that pushes the movable sheave 79 toward the fixed sheave 78. When the winding radius of the V-belt 71 increases for the drive pulley device 67, in the driven pulley device 69 the movable sheave 79 moves away from the fixed sheave 78 against the resilient force of the coil spring 82 and the winding radius of the V-belt 71 decreases.

The centrifugal clutch 81 includes an outer plate 81b fixed to the driven shaft 68. The outer plate 81b faces the clutch plate 81a. When the clutch plate 81a rotates, the outer plate 81b is joined to the clutch plate 81a by the action of centrifugal force. Rotation of the driven pulley device 69 is thus transmitted to the driven shaft 68. When the engine rotational speed exceeds a set rotational speed, the centrifugal clutch 81 establishes a power transmission state.

The reduction gear mechanism 59 includes a drive gear 83 fixed to the driven shaft 68 protruding into the gear chamber 65, a final gear 84 fixed to the axle 58 of the rear wheel WR, and idle gears 85a and 85b disposed between the drive gear 83 and the final gear 84. The idle gears 85a and 85b are fixed to a common intermediate shaft 86. The drive gear 83 meshes with the idle gear 85a, and the final gear 84 meshes with the idle gear 85b. In this way, rotation of the driven shaft 68 is reduced in speed and transmitted to the axle 58 of the rear wheel WR.

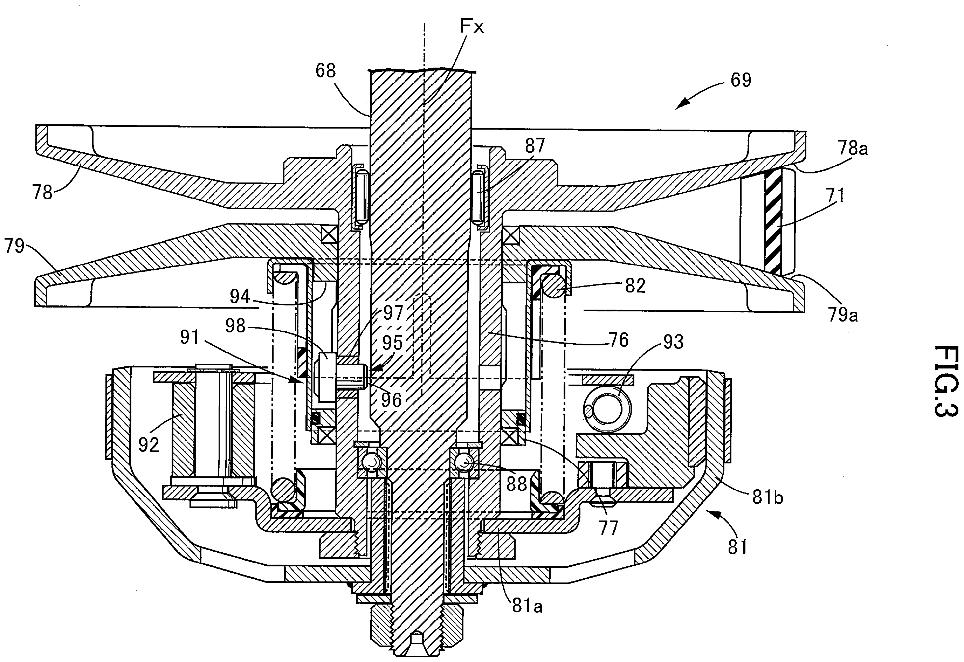

As shown in FIG. 3, in the driven pulley device 69 a needle bearing 87 and a ball bearing 88 are disposed between the driven shaft 68 and the inner tube 76. The outer tube 77 surrounds the inner tube 76 so that it is coaxially slidable against the inner tube 76. The V belt 71 is sandwiched between mutually opposing conical faces 78a and 79a in the fixed sheave 78 and the movable sheave 79. The coil spring 82 surrounds the outer tube 77 and is contained in a compressed state between the movable sheave 79 and the clutch plate 81a. A torque cam mechanism 91 is provided between the inner tube 76 and the outer tube 77, the torque cam mechanism 91 making an axial component of force act between the movable sheave 79 and the fixed sheave 78 in response to a relative rotational phase difference between the movable sheave 79 and the fixed sheave 78.

The centrifugal clutch 81 includes centrifugal weights 92 and a clutch spring 93 that links the respective centrifugal weights 92 individually to the clutch plate 81a, the centrifugal weights 92 being supported at a plurality of locations of the clutch plate 81a so that they can rotate around an axis parallel to the driven shaft 68. When the centrifugal force acting on each centrifugal weight 92 in response to rotation of the clutch plate 81a exceeds the spring resilient force of the corresponding clutch spring 93, the centrifugal weight 92 is frictionally joined to the outer plate 81b, and the inner tube 76, that is, the fixed sheave 78, and the outer plate 81b, that is, the driven shaft 68, are joined.

The torque cam mechanism 91 includes a cam hole 94 provided at a plurality of locations of the outer tube 77, and a cam pin 95 protruding from an outer peripheral face of the inner tube 76 and inserted into the individual cam hole 94. The cam pin 95 is formed from a cylindrical body 96 having an axis on a diameter orthogonal to an axis Fx of the driven shaft 68, a bearing 97 embedded in the inner tube 76 and fixing the cylindrical body 96 to the inner tube 76 so that they can undergo relative rotation, and a piece 98 coaxially fixed to the cylindrical body 96 within the cam hole 94. The piece 98 is formed from a heavy and rigid material such as for example steel. In the driven pulley device 69, the gap between the fixed sheave 78 and the movable sheave 79 is determined by the balance between a force in the axial direction generated by the torque cam mechanism 91, a resilient force in the axial direction generated by the coil spring 82, and a force from the V belt 71 acting in a direction that increases the gap between the fixed sheave 78 and the movable sheave 79.

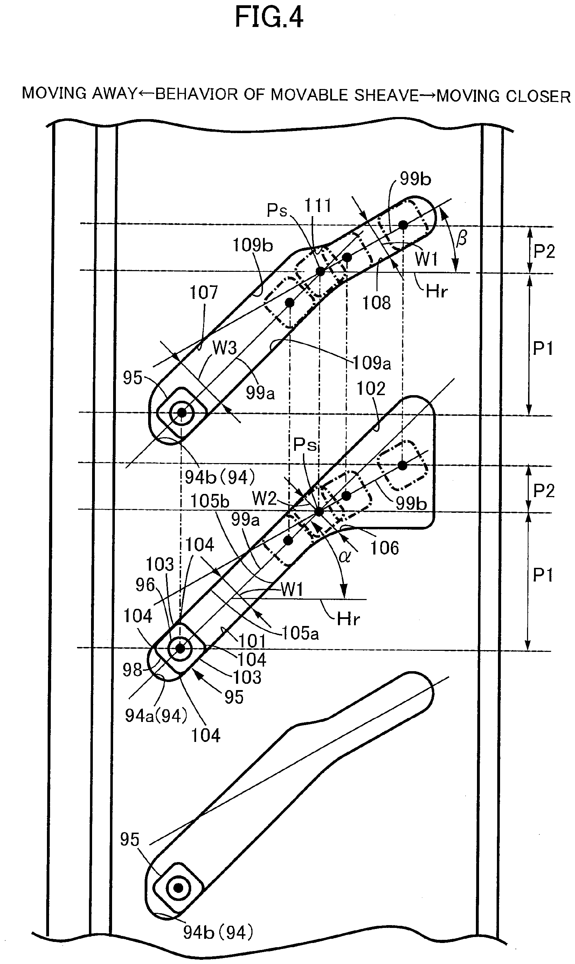

As shown in FIG. 4, the cam hole 94 is formed by a combination of two or more cam holes having different shapes. Here, the cam hole 94 is formed from a first cam hole 94a having a first shape and a second cam hole 94b having a second shape. The first cam hole 94a has a first restricting region 101 extending with a first width W1 along a first reference line 99a inclined by a first angle α with respect to a virtual plane Hr containing the axis Fx of the driven shaft 68 in a first range PI of relative rotational phase difference established by the movable sheave 79 and the fixed sheave 78, and a first release region 102 extending with a second width W2, larger than the first width W1, along a second reference line 99b inclined by a second angle β, smaller than the first angle α, with respect to the virtual plane Hr containing the axis Fx of the driven shaft 68 in a second range P2 that is continuous from the first range PI of the relative rotational phase difference. The first range PI of the relative rotational phase difference corresponds to a low speed travel region. The second range P2 of the relative rotational phase difference corresponds to a high speed travel region. Here, the first angle α is set to be for example 45 degrees and the second angle β is set to be for example 30 degrees.

The piece 98 of the cam pin 95 defines a pair of flat faces 103 that are parallel to the axis of the cylindrical body 96 and are parallel to the direction of movement. The first width W1 corresponds to the width of the piece 98 of the cam pin 95, that is, the distance between the flat faces 103. An end part of the flat face 103 of the cam pin 95 has an end part curved face part 104 having a curved face shape. The end part curved face part 104 is formed from a curved face with a generatrix that is parallel to the axis of the cylindrical body 96. Here, the piece 98 is surrounded by four flat faces 103.

A transition point Ps for the cam pin 95 is defined at the border between the first range PI and the second range P2 of the relative rotational phase difference. In the first cam hole 94a, at the transition point Ps the piece 98 of the cam pin 95 can rotate at least with a rotational angle corresponding to the difference between the first angle α and the second angle β. The first range PI and the second range P2 may be defined based on the axis of the cam pin 95. The piece 98 disengages from the first restricting region 101 at the transition point.

Here, a first side wall 105a of the first cam hole 94a is disposed in parallel with the first reference line 99a so as to be continuous in the first range PI and the second range P2. When the movable sheave 79 moves away from the fixed sheave 78, the first side wall 105a applies an axial component of force to the piece 98 of the cam pin 95 within the first range PI. A second side wall 105b opposing the first side wall 105a is disposed in parallel with the first reference line 99a in the first range P1. At the transition point Ps a convexly curved face part 106 having a convexly curved face shape is defined on the second side wall 105b. The convexly curved face part 106 is formed from a curved face having a generatrix parallel to the axis of the cylindrical body 96.

The second cam hole 94b has a second release region 107 extending with a third width W3, larger than the first width W1, along the first reference line 99a inclined by the first angle α with respect to the virtual plane Hr containing the axis Fx of the driven shaft 68 in the first range PI of the relative rotational phase difference established by the movable sheave 79 and the fixed sheave 78, and a second restricting region 108 extending with the first width W1 along the second reference line 99b inclined by the second angle β with respect to the virtual plane Hr containing the axis Fx of the driven shaft 68 in the second range P2 continuous from the first range PI of the relative rotational phase difference. In the second cam hole 94b, at the transition point Ps the piece 98 of the cam pin 95 can rotate with a rotational angle corresponding to the difference between the first angle α and the second angle β. The piece 9 disengages from the second restricting region 108 at the transition point.

Here, a third side wall 109a of the second cam hole 94b is disposed in parallel with the first reference line 99a in the first range PI, and is disposed in parallel with the second reference line 99b in the second range P2. When the movable sheave 79 moves closer to the fixed sheave 78 the third side wall 109a makes an axial component of force act on the piece 98 of the cam pin 95. A fourth side wall 109b opposing the third side wall 109a is disposed in parallel with the second reference line 99b in the second range P2. At the transition point Ps a convexly curved face part 111 having a convexly curved shape is defined on the fourth side wall 109b. The convexly curved face part 111 is formed from a curved face having a generatrix parallel to the axis of the cylindrical body 96.

The operation of this embodiment is now explained. In the drive pulley device 67 the movable sheave 74 is the furthest from the fixed sheave 73. The V belt 71 is the closest to the crankshaft 32. In the driven pulley device 69 the movable sheave 79 is the closest to the fixed sheave 78. The V belt 71 is the furthest from the driven shaft 68. When the crankshaft 32 rotates, in the drive pulley device 67 the fixed sheave 74 and the movable sheave 73 rotate.

As the speed of travel increases, in the drive pulley device 67 the movable sheave 74 moves closer to the fixed sheave 73. The V belt 71 moves away from the crankshaft 32. In reaction thereto, in the driven pulley device 69 the V belt 71 attempts to move closer to the driven shaft 68. In response to the driving force of the V belt 71 relative rotation is triggered between the fixed sheave 78 and the movable sheave 79. In this process, the first cam hole 94a restricts the direction of movement of the corresponding cam pin 95, but the second cam hole 94b does not restrict the direction of movement of the corresponding cam pin 95. That is, in the first cam hole 94a an axial component of force is applied from the first side wall 105a to the piece 98 of the cam pin 95. With the reaction force thereof, in the movable sheave 79 a driving force that makes it move away from the fixed sheave 78 is generated.

When the cam pin 95 reaches the transition point, in the first cam hole 94a the piece 98 of the cam pin 95 disengages from the first restricting region 101. The piece 98 is allowed to rotate around the axis of the cylindrical body 96. In this process, in the second cam hole 94b the piece 98 of the cam pin 95 is positioned at the terminal end of the second release region 107. Furthermore, when relative rotation progresses between the fixed sheave 78 and the movable sheave 79, in the second cam hole 94b the piece 98 of the cam pin 95 enters the second restricting region 108. The end part curved face part 104 of the piece 98 comes into contact with the convexly curved face part 111 of the fourth side wall 109b, and the cam pin 95 can smoothly change to a state in which it is restricted by the second cam hole 94b. In this way, the axial movement of the movable sheave 79 can be shifted smoothly from the low speed travel region to the high speed travel region.

In the second range P2 the second cam hole 94b restricts the direction of movement of the corresponding cam pin 95, but the first cam hole 94a does not restrict the direction of movement of the corresponding cam pin 95. That is, in the second cam hole 94b an axial component of force acts from the fourth side wall 109b on the piece 98 of the cam pin 95. With the reaction force thereof, in the movable sheave 74 a driving force that makes it move away from the fixed sheave 73 is generated.

As the speed of travel decreases, in the drive pulley device 67 the movable sheave 74 moves away from the fixed sheave 73. The V belt 71 moves closer to the crankshaft 32. In a reaction thereto, in the driven pulley device 69 the V belt 71 attempts to move away from the driven shaft 68. In response to the driving force of the V belt 71 relative rotation is triggered between the fixed sheave 78 and the movable sheave 79. In this process, the second cam hole 94b restricts the direction of movement of the corresponding cam pin 95, but the first cam hole 94a does not restrict the direction of movement of the corresponding cam pin 95. That is, in the second cam hole 94b an axial component of force acts from the third side wall 109a on the piece 98 of the cam pin 95. With the reaction force thereof in the movable sheave 74 a driving force that makes it move closer to the fixed sheave 73 is generated.

When the cam pin 95 reaches the transition point, in the second cam hole 94b the piece 98 of the cam pin 95 disengages from the second restricting region 108. The piece 98 is allowed to rotate around the axis of the cylindrical body 96. In this process, in the first cam hole 94a the piece 98 of the cam pin 95 is positioned at the terminal end of the first release region 102. Furthermore, when relative rotation progresses between the fixed sheave 78 and the movable sheave 79, in the first cam hole 94a the piece 98 of the cam pin 95 enters the first restricting region 101. The end part curved face part 104 of the piece 98 comes into contact with the convexly curved face part 106 of the second side wall 105b, and the cam pin 95 can smoothly change to a state in which it is restricted by the first cam hole 94a. In this way, the axial movement of the movable sheave 74 can be shifted smoothly from the high speed travel region to the low speed travel region.

In the first range PI the first cam hole 94a restricts the direction of movement of the corresponding cam pin 95, but the second cam hole 94b does not restrict the direction of movement of the corresponding cam pin 95. That is, in the first cam hole 94a an axial component of force is applied from the second side wall 105b to the piece 98 of the cam pin 95. With the reaction force thereof, in the movable sheave 74 a driving force that makes it move closer to the fixed sheave 73 is generated.

In this embodiment, the cam pin 95 has the flat face 103 parallel to the direction of movement. With regard to the movable sheave 74 the cam pin 95 is received in each of the first cam hole 94a and the second cam hole 94b, and an axial component of force is produced between the cam pin 95 and the cam hole 94. Since the cam pin 95 makes plane contact with an inner wall of the cam hole 94 via the flat face 103, the contact pressure between the cam pin 95 and the side wall of the cam hole 94 is reduced. As a result, the durability of the torque cam mechanism 91 improves. In response to the contact pressure being decreased, an iron material can be used for the piece 98 of the cam pin 95, and an aluminum material can be used for the movable sheave 74 defining the cam hole 94.

In the driven pulley device 69, the cam hole 94 (94a, 94b) is formed with two or more different shapes. Therefore, in the first range PI the first cam hole 94a restricts the direction of movement of the corresponding cam pin 95, but the second cam hole 94b does not restrict the direction of movement. In the second range P2, the second cam hole 94b restricts the direction of movement of the corresponding cam pin 95, but the first cam hole 94a does not restrict the direction of movement of the cam pin 95. That is, in a state in which one cam hole 94a or 94b restricts the direction of movement of the cam pin 95, another cam hole 94b or 94a does not restrict the direction of movement. In this way, since one cam hole 94a or 94b restricts the direction of movement of the cam pin 95 for each of the ranges of relative rotational phase difference divided by the transition point Ps, it is possible to change the direction of movement of the cam pin 95 at the transition point Ps, and it is possible to give a trajectory with a polygonal line shape to the cam pin 95 in the torque cam mechanism 91.

In the first range PI the first restricting region 101 is inclined by the first angle α with respect to the virtual plane Hr containing the axis Fx of the driven shaft 68, and in the second range P2 the second restricting region 108 is inclined by the second angle β with respect to the virtual plane Hr. In response to the range of relative rotational phase difference, the direction of movement of the cam pin 95 varies on the movable sheave 74. In this way, due to the angles being different, the magnitude of the axial component of force can be changed.

With regard to the shape of the cam hole 94, a portion where a state in which movement of the cam pin 95 is not restricted changes to a state in which it is restricted has a convexly curved face part 106 or 111 having a convexly curved face shape. In this way, due to the convexly curved face shape being present, the change to a state in which it is restricted by the cam hole 94 can be carried out smoothly.

An end part of the flat face 103 of each cam pin 95 has the end part curved face part 104. When the cam pin 95 enters the first restricting region 101 from the first release region 102 or when the cam pin 95 enters the second restricting region 108 from the second release region 107, the end part curved face part 104 and the convexly curved face part 106 or 111 abut against each other. Due to the presence of the end part curved face part 104, the change to a state in which it is restricted by the cam hole 94 can be carried out smoothly.

The outer tube 77 is formed from a material that is lighter than the cam pin 95. In this way, the weight of the outer tube 77 can be lightened. For example, the outer tube 77 may be formed from an aluminum material. Since the piece 98 of the cam pin 95 makes plane contact with the side wall of the cam hole 94 via the flat face 103, the contact pressure can be reduced. Wear of the aluminum material is suppressed. The precision of the cam hole 94 can be maintained sufficiently.

The outer tube 77 and the movable sheave 79 are formed as a unit. A part via which the movable sheave 79 and the outer tube 77 are joined becomes unnecessary, thus enabling high strength to be achieved. Furthermore, a joining step becomes unnecessary, thereby enabling the production cost to be lowered.

### EXPLANATION OF REFERENCE NUMERALS AND SYMBOLS

- 67: Drive pulley (drive pulley device)
- 71: V belt
- 76: Inner tube
- 77: Outer tube
- 78: Fixed pulley half (fixed sheave)
- 79: Movable pulley half (movable sheave)
- 91: Torque cam mechanism
- 94: Cam hole
- 94a: Cam hole (first cam hole)
- 94b: Cam hole (second cam hole)
- 95: Cam pin
- 103: Flat face
- 104: End part curved face part
- 106: Convexly curved face part
- 111: Convexly curved face part
- α: Angle (first angle)
- β: Angle (second angle)

## Claims

1. A driven pulley device (69) for a V-belt type automatic transmission (57), comprising
an inner tube (76) and an outer tube (77) that are slidably fitted together so as to be relatively rotatable around an axis and relatively movable in the direction of the axis,
a fixed pulley half (78) that is fixed to the inner tube (76),
a movable pulley half (79) that opposes the fixed pulley half (78) and is fixed to the outer tube (77), and
a torque cam mechanism (91) that is provided between the inner tube (76) and the outer tube (77) so as to make an axial component of force act between the movable pulley half (79) and the fixed pulley half (78) in response to a relative rotational phase difference between the two pulley halves (79, 78),
a V belt (71) that transmits rotational power from the drive pulley (67) being sandwiched between conical faces (78a, 79a), opposing each other, of the fixed pulley half (78) and the movable pulley half (79),
wherein the torque cam mechanism (91) is formed from a cam pin (95) and a cam hole (94) in which the cam pin (95) can move, and
the cam pin (95) has a flat face (103) that is parallel to the direction of movement, **characterized in that** there are two or more different shapes for the cam hole (94a, 94b), and in a state in which one cam hole (94a, 94b) is restricting the direction of movement of the cam pin (95), another cam hole (94b, 94a) is not restricting the direction of movement.

2. The driven pulley device for a V-belt type automatic transmission according to Claim 1, wherein the directions of movement of the cam pin (95) restricted by the cam holes (94a, 94b) have different angles (α, β).

3. The driven pulley device for a V-belt type automatic transmission according to Claim 1 or 2, wherein with regard to a shape of the cam hole (94a, 94b), a portion where a state in which movement of the cam pin (95) is not restricted changes to a state in which movement of the cam pin (95) is restricted has a convexly curved face part (106, 111) that has a convexly curved face shape.

4. The driven pulley device for a V-belt type automatic transmission according to any one of Claims 1 to 3, wherein an end part of the flat face (103) of the cam pin (95) has an end part curved face part (104) having a curved face shape.

5. The driven pulley device for a V-belt type automatic transmission according to Claim 3, wherein an end part of the flat face (103) of the cam pin (95) has an end part curved face part (104) having a curved face shape, and the end part curved face part (104) and the convexly curved face part (106, 111) abut against each other.

6. The driven pulley device for a V-belt type automatic transmission according Claim 4 or 5, wherein
the cam pin (95) is configured with: a cylindrical body (96) having an axis thereof on a diameter orthogonal to an axis (Fx) of the inner tube (76); a bearing (97) embedded in the inner tube (76) and fixing the cylindrical body (96) relatively rotatably to the inner tube (76); and a piece (98) coaxially fixed to the cylindrical body (96) within the cam hole (94), and
the piece (98) is rotatable around the axis of the cylindrical body (96) between a first angle (α) and a second angle (β).

7. The driven pulley device for a V-belt type automatic transmission according to any one of Claims 1 to 6, wherein the outer tube (77) is formed from a material that is lighter than the cam pin (95).

8. The driven pulley device for a V-belt type automatic transmission according to any one of Claims 1 to 7, wherein the outer tube (77) and the movable pulley half (79) are formed as a unit.

## Patentansprüche

1. Angetriebene Riemenscheibenvorrichtung (69) für ein Automatikgetriebe vom Keilriementyp (57), die aufweist
ein Innenrohr (76) und ein Außenrohr (77), die verschiebbar zusammengepasst sind, um so diesbezüglich um eine Achse rotierbar zu sein und diesbezüglich in der Achsenrichtung bewegbar zu sein,
eine fixierte Riemenscheibenhälfte (78), die am Innenrohr (76) befestigt ist,
eine bewegliche Riemenscheibenhälfte (79), die der fixierten Riemenscheibenhälfte (78) gegenüberliegt und am Außenrohr (77) befestigt ist, und
einen Drehmomentnockenmechanismus (91), der zwischen dem Innenrohr (76) und dem Außenrohr (77) vorgesehen ist, um so eine axiale Kraftkomponente zwischen der beweglichen Riemenscheibenhälfte (79) und der fixierten Riemenscheibenhälfte (78) in Reaktion auf eine diesbezügliche Rotationsphasendifferenz zwischen den beiden Riemenscheibenhälften (79, 78) wirksam zu machen,
einen Keilriemen (71), der eine Rotationskraft von der Antriebsriemenscheibe (67) überträgt, zwischen den einander gegenüberliegenden konischen Flächen (78a, 79a) der fixierten Riemenscheibenhälfte (78) und der beweglichen Riemenscheibenhälfte (79) angeordnet ist,
wobei der Drehmomentnockenmechanismus (91) aus einem Nockenstift (95) und einer Nockenöffnung (94) ausgebildet ist, in der sich der Nockenstift (95) bewegen kann, und
der Nockenstift (95) eine flache Fläche (103) hat, die parallel zu der Bewegungsrichtung ist,
**dadurch gekennzeichnet, dass** zwei oder mehr unterschiedliche Formen für die Nockenöffnung (94a, 94b) vorliegen, und in einem Zustand, in dem eine Nockenöffnung (94a, 94b), die Bewegungsrichtung des Nockenstifts (95) beschränkt, beschränkt die andere Nockenöffnung (94b, 94a) die Bewegungsrichtung nicht.

2. Angetriebene Riemenscheibenvorrichtung für ein Automatikgetriebe vom Keilriementyp nach Anspruch 1, wobei die durch die Nockenöffnungen (94a, 94b) eingeschränkten Bewegungsrichtungen des Nockenstifts (95) verschiedene Winkel (α, β) haben.

3. Angetriebene Riemenscheibenvorrichtung für ein Automatikgetriebe vom Keilriementyp nach Anspruch 1 oder 2, wobei bezüglich einer Form der Nockenöffnung (94a, 94b) ein Bereich, in dem ein Zustand, in dem die Bewegung des Nockenstifts nicht beschränkt ist, in einen Zustand übergeht, in dem die Bewegung des Nockenstifts (95) beschränkt ist, ein konvex gebogenes Flächenteil (106, 111) hat, das eine konvex gebogene Flächenform hat.

4. Angetriebene Riemenscheibenvorrichtung für ein Automatikgetriebe des Keilriementyps nach einem der Ansprüche 1 bis 3, wobei ein Endteil der flachen Fläche (103) des Nockenstifts (95) ein endseitiges gebogenes Flächenteil (104) hat, das eine gebogene Flächenform hat.

5. Angetriebene Riemenscheibenvorrichtung für ein Automatikgetriebe von Keilriementyp nach Anspruch 3, wobei ein Endteil der flachen Fläche (103) des Nockenstifts (95) ein endseitiges gebogenes Flächenteil (104) hat, das eine gebogene Flächenform hat, und das endseitige gebogene Flächenteil (104) und das konvex gebogene Flächenteil (106, 111) aneinander anstoßen.

6. Angetriebene Riemenscheibenvorrichtung für ein Automatikgetriebe vom Keilriementyp nach Anspruch 4 der 5, wobei
der Nockenstift (95) ausgestaltet ist mit:
einem zylindrischen Körper (96), der eine Achse davon an einem Durchmesser orthogonal zu einer Achse (Fx) des Innenrohrs (76) hat;
einem Lager (97), das in das Innenrohr (76) eingebettet ist und den zylindrischen Körper (96) diesbezüglich rotierbar am Innenrohr (76) befestigt;
und einem Teil (98), das koaxial am zylindrischen Körper (96) in der Nockenöffnung (94) befestigt ist, und
das Teil (98) um die Achse des zylindrischen Körpers (96) zwischen einem ersten Winkel (α) und einen zweiten Winkel (β) rotierbar ist.

7. Angetriebene Riemenscheibenvorrichtung für ein Automatikgetriebe vom Keilriementyp nach einem der Ansprüche 1 bis 6, wobei das Außenrohr (77) aus einem Material ausgebildet ist, das leichter als der Nockenstift (95) ist.

8. Angetriebene Riemenscheibenvorrichtung für ein Automatikgetriebe vom Keilriementyp nach einem der Ansprüche 1 bis 7, wobei das Außenrohr (77) und die bewegliche Riemenscheibenhälfte (79) als eine Einheit ausgebildet sind.

## Revendications

1. Dispositif de poulie attaquée (69) pour une transmission automatique de type à courroie trapézoïdale (57), comprenant un tube interne (76) et un tube externe (77) qui sont ajustés ensemble de façon coulissante de manière à pouvoir tourner l'un relativement à l'autre autour d'un axe et à être mobiles l'un relativement à l'autre dans le sens de l'axe,
une moitié de poulie fixe (78) qui est fixée au tube interne (76),
une moitié de poulie mobile (79) qui contre-carre la moitié de poulie fixe (78) et est fixée au tube externe (77), et
un mécanisme à came de torsion (91) qui est prévu entre le tube interne (76) et le tube externe (77) de manière à faire agir une composante de force axiale entre la moitié de poulie mobile (79) et la moitié de poulie fixe (78) en réponse à une différence de phase rotative relative entre les deux moitiés de poulie (79, 78),
une courroie trapézoïdale (71) qui transmet une puissance rotative depuis la poulie menante (67) prise en sandwich entre des faces coniques (78a, 79a), s'opposant les unes aux autres, de la moitié de poulie fixe (78) et de la moitié de poulie mobile (79),
dans lequel le mécanisme à came de torsion (91) est formé à partir d'un axe de came (95) et d'un trou de came (94) dans lequel l'axe de came (95) peut se déplacer, et
l'axe de came (95) a une surface plate (103) qui est parallèle au sens du mouvement,
**caractérisé en ce qu'**il existe deux ou plusieurs formes différentes pour le trou de came (94a, 94b), et dans un état dans lequel un trou de came (94a, 94b) limite le sens du mouvement de l'axe de came (95), un autre trou de came (94b, 94a) ne limite pas le sens du mouvement.

2. Dispositif de poulie attaquée pour une transmission automatique de type à courroie trapézoïdale selon la revendication 1, dans lequel les sens du mouvement de l'axe de came (95) limité par les trous de came (94a, 94b) ont des angles différents (α, β).

3. Dispositif de poulie attaquée pour une transmission automatique de type à courroie trapézoïdale selon la revendication 1 ou 2, dans lequel par rapport à une forme du trou de came (94a, 94b), une portion où un état dans lequel le mouvement de l'axe de came (95) n'est pas limité se modifie en un état dans lequel le mouvement de l'axe de came (95) est limité, a une partie de face incurvée de façon convexe (106, 111) qui a une forme de face incurvée de façon convexe.

4. Dispositif de poulie attaquée pour une transmission automatique de type à courroie trapézoïdale selon l'une quelconque des revendications 1 à 3, dans lequel une partie d'extrémité de la face plate (103) de l'axe de came (95) a une partie de face incurvée (104) de partie d'extrémité ayant une forme de face incurvée.

5. Dispositif de poulie attaquée pour une transmission automatique de type à courroie trapézoïdale selon la revendication 3, dans lequel une partie d'extrémité de la face plate (103) de l'axe de came (95) a une partie de face incurvée de partie d'extrémité (104) ayant une forme de face incurvée, et la partie de face incurvée de partie d'extrémité (104) et la partie de face incurvée de façon convexe (106, 111) butent l'une contre l'autre.

6. Dispositif de poulie attaquée pour une transmission automatique de type à courroie trapézoïdale selon la revendication 4 ou 5, dans lequel l'axe de came (95) est configuré avec :
un corps cylindrique (96) ayant un axe de celui-ci sur un diamètre orthogonal à un axe (Fx) du tube interne (76) ; un palier (97) encastré dans le tube interne (76) et fixant le corps cylindrique (96) de façon relativement rotative par rapport au tube interne (76) ; et une pièce (98) fixée de façon coaxiale au corps cylindrique (96) à l'intérieur du trou de came (94), et
la pièce (98) est rotative autour de l'axe du corps cylindrique (96) entre un premier angle (a) et un deuxième angle (β).

7. Dispositif de poulie attaquée pour une transmission automatique de type à courroie trapézoïdale selon l'une quelconque des revendications 1 à 6, dans lequel le tube externe (77) est formé dans une matière qui est plus légère que l'axe de came (95).

8. Dispositif de poulie attaquée pour une transmission automatique de type à courroie trapézoïdale selon l'une quelconque des revendications 1 à 7, dans lequel le tube externe (77) et la moitié de poulie mobile (79) sont formés comme une unité.
